# EUROPÄISCHE PATENTANMELDUNG

(11) **EP 0 968 803 A2**
(43) Veröffentlichungstag der Anmeldung: **05.01.2000**
(21) Anmeldenummer: 99112482.7
(22) Anmeldetag: 01.07.1999
(51) Int. Cl.: B29C 35/08

(54) **Verfahren und Vorrichtung zum thermischen Verbinden von geschäumten Polymerpartikeln**

(30) Priorität: 02.07.1998 DE 19829562
(71) Anmelder: Fraunhofer-Gesellschaft zur Förderung der angewandten Forschung e.V., 80636 München (DE); Gefinex Polymerschäume GmbH, 33803 Steinhagen (DE)
(72) Erfinder: Kauffmann, Axel, 71263 Weil der Stadt (DE); Ziegler, Maik, 71287 Weissach (DE); Schrök, Jochen, 76327 Pfinztal (DE); Hofmann, Knut, 75015 Bretten (DE); Elsner, Peter, 76327 Pfinztal (DE); Bruning, Jürgen, 33824 Werther (DE); Ziegler, Lars, 71229 Leonberg (DE); Montes-Lafuente, Jaime, 76131 Karlsruhe (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Ein Verfahren zum thermischen Verbinden von geschäumten Polymerpartikeln (7,7a) zu Formteilen mittels Mikrowellenenergie unter Verwendung eines MW-absorbierenden Mediums, wobei die geschäumten Polymerpartikel mit dem MW-absorbierenden Medium zwischen umlaufenden Trägerbändern aufgegeben und als dichte Packung mittels der Trägerbänder (2a,2b,2c,2d) an wenigstens einer MW-Energiequelle kontinuierlich vorbeigeführt werden, wobei Art und Menge des MW-absorbierenden Mediums so gewählt werden, daß den Partikeln bei Umgebungsdruck die zur Herstellung des Verbundes notwendige Schmelzwärme zugeführt wird. Zur Durchführung des Verfahrens wird eine Vorrichtung mit wenigstens zwei unter Umgebungsdruck gehaltenen, im wesentlichen parallel angeordneten, umlaufenden Trägerbändern (2a,2b,2c,2d) vorgeschlagen, in deren Zwischenraum die Polymerpartikel sowie gegebenenfalls MW-absorbierende Medien einbringbar sind, und die an einem oder mehreren hintereinander angeordneten MW-Strahlern vorbeilaufen.

## Beschreibung

Die Erfindung betrifft ein Verfahren und eine Vorrichtung zum thermischen Verbinden von geschäumten Polymerpartikel zu Formteilen mittels Mikrowellenenergie unter Verwendung eines MW-absorbierenden Mediums.

Derartige Verfahren, bei denen geschäumte oder vorgeschäumte Polymerpartikel mit einem MW-absorbierenden Medium versetzt in eine Form eingebracht, diese verschlossen und die Partikel mittels MW-Energie verschmolzen und/oder unter Freisetzung eines Treibmittels zusätzlich expandiert werden, sind bekannt (US 3,010,157, US 4,173,608, US 3,193,874, US 3,253,064, US 3,420,923, US 4,298,324, US 4,454,081, US 4,765,934, FR 2 320 818). Das thermische Verbinden der Partikel wird dabei durch das im allgemeinen flüssige MW-absorbierende Medium erreicht, welches unter hochfrequenter elektromagnetischer Strahlung, deren Frequenz in etwa der Resonanzfrequenz der Moleküle des MW-absorbierenden Mediums entspricht, verdampft und sich gleichmäßig in der Form verteilt, wobei der Siedepunkt des MW-absorbierenden Mediums durch die Zugabe von Hilfsstoffen und den Druck in der Form beeinflußt werden kann. Durch die Wärme des in den gasförmigen Zustand überführten MW-absorbierenden Mediums verschmelzen die Partikel und expandieren gegebenenfalls unter Freisetzung eines Treibmittels. Die Formen müssen zu diesem Zweck druckdicht verschlossen sein.

Die WO 90/08642 beschreibt ein derartiges Verfahren zur Herstellung von Formteilen aus expandierbaren Kunststoffpartikel in einer Form, die in einem Mikrowellenfeld rotierbar ist, wobei die Partikel mit einem während des Verfahrens verdampfenden MW-absorbierenden Medium benetzt sind.

Nachteilig bei den bekannten Verfahren ist einerseits, daß sie nur chargenweise betrieben werden können, da die Kunststoffpartikel mit einem MW-absorbierenden Medium in eine Form eingebracht werden, diese verschlossen und in ein Mikrowellenfeld eingebracht, nach Verschmelzen der Partikel die Form abgekühlt und das Formteil entnommen wird. Auch die Herstellung der Formen ist aufwendig und teuer, da sie aufgrund des in den gasförmigen Zustand überführten MW-absorbierenden Mediums sowie den im allgemeinen bei hohen Temperaturen expandierenden Kunststoffpartikeln hohen Drücken standhalten und zudem druckdicht sein müssen.

Aus der EP 0 705 682 A1 ist ein Verfahren zum thermischen Verbinden von Schaumstoffpartikel unterschiedlicher Polymere bekannt, die mittels MW-Energie bei Anwesenheit eines MW-absorbierenden Mediums unter mechanischem Druck miteinander verschweißt werden. Wie die Herstellung von Formteilen im einzelnen erfolgt, läßt die Druckschrift offen.

Die US 5 338 765 beschreibt eine Vorrichtung mit einem Trägerband aus Metall, welches zum Schäumen von Partikel eines Polyimidprepolymers vorgewärmt ist und zur Verschmelzung der Partikel durch einen Ofen mit konvektiver Wärmeübertragung geleitet wird. Diese Vorrichtung ist jedoch nicht zur Herstellung von Formteilen durch thermisches Verbinden von geschäumten Polymerpartikeln mittels MW-Energie unter Verwendung eines MW-absorbierenden Mediums geeignet. Die nur duch Übertragung und Leitung in die Partikel eingebrachte Wärme führt zu einer langen Verfahrensdauer und setzt der Dicke des Formteils sehr enge Grenzen.

Ein Verfahren zur kontinuierlichen Herstellung von strangförmigen Körpern aus geschäumten Polymerpartikeln ist der DE 196 48 093 A1 entnehmbar. Hierbei werden die Polymerpartikel mit einem mikrowellenabsorbierenden Medium beschichtet oder benetzt und in einer Fördereinrichtung komprimiert und mittels Mikrowellenenergie versintert. Die Fördereinrichtung ist nach Art eines Extruders ausgebildet und weist eine in einem Rohr angeordnet Förderschnecke sowie am Umfang des Rohrs angeordnete MW-Energiequellen auf. Nachteilig ist einerseits, daß die Kontur des gebildeten strangförmigen Körpers durch den Querschnitt des Rohres fest vorgegeben ist. Andererseits ist eine Wartung bzw. Reinigung, insbesondere bei Verstopfung des Rohres, aufwendig, da die Förderschnecke schwer zugänglich ist.

Der Erfindung liegt die Aufgabe zugrunde, unter Vermeidung der vorgenannten Nachteile ein Verfahren zum thermischen Verbinden von Schaumstoffpartikel zu Schaumstofformteilen mittels MW-Energie unter Verwendung eines MW-absorbierenden Mediums vorzuschlagen. Ferner soll eine Vorrichtung zur Durchführung eines derartigen Verfahrens geschaffen werden.

Der erste Teil dieser Aufgabe wird bei einem Verfahren der eingangs genannten Art dadurch gelöst, daß die geschäumten Polymerpartikel mit dem MW-absorbierenden Medium zwischen umlaufenden Trägerbändern aufgegeben und als dichte Packung mittels der Trägerbänder an wenigstens einer MW-Energiequelle kontinuierlich vorbeigeführt werden, wobei Art und Menge des MW-absorbierenden Mediums so gewählt werden, daß den Partikeln bei dem herrschenden Umgebungsdruck die zur Herstellung des Verbundes notwendige Schmelzwärme zugeführt wird.

Das erfindungsgemäße Verfahren wird bei Umgebungsdruck kontinuierlich durchgeführt, so daß bei einer stetigen Zufuhr geschäumter Polymerpartikel zwischen die umlaufenden Trägerbänder eine optimale Auslastung der Produktionsanlage gewährleistet ist. Es entsteht ein endloses Formteil, das gegebenenfalls abgelängt wird. Die Abmessungen des Formteils können vorzugsweise durch Variation des Abstandes der Trägerbänder verändert werden. Sofern die eingebrachten Polymerpartikel nur vorgeschäumt sind, enthalten sie vorzugsweise solche Treibmittel, die während des Einwirkens der MW-Energie die Partikel bis zur gewünschten Endporosität aufschäumen.

Um eine möglichst homogene Struktur der Formteile zu erreichen, ist in bevorzugter Ausführung vorgesehen, daß die geschäumten Polymerpartikel zwischen den Trägerbändern zumindest während der MW-Behandlung unter mechanischem Druck gehalten werden. Durch den mechanischen Druck während der MW-Behandlung wird einerseits die MW-absorbierende Flüssigkeit gleichmäßig im Kontaktbereich der Partikel verteilt, andererseits kommt es zu einer homogenen festen Verbindung zwischen den flexiblen Partikeln aufgrund der durch Verformen der Partikel vergrößerten Kontaktfläche. Bei Verwendung spezieller Partikel, z.B. EPP-Partikel, können diese beispielsweise zusätzlich in Druckkammern vorkomprimiert werden. Derartige Partikel zeigen bei Verformung, z.B. bei Komprimierung, zwar ein elastisches Verhalten, tendieren aber zu einer zeitlich verzögerten Rückstellung in ihre ursprüngliche Form, so daß sie während der erfindungsgemäßen Verarbeitung expandieren und dadurch ein erhöhter Kontaktdruck erzeugt wird.

Als MW-absorbierendes Medium wird erfindungsgemäß eine die Oberfläche der geschäumten Polymerpartikel benetzende Flüssigkeit verwendet, die auf die Oberfläche der Polymerpartikel diese einhüllend aufgebracht und insbesondere unter Einwirkung der MW-Energie verdampft wird.

Durch die Verwendung einer derartigen Flüssigkeit in Verbindung mit der Verfahrensdurchführung bei Umgebungsdruck sind die Verfahrensparameter Verarbeitungstemperatur und -zeit durch die zugegebene Menge der Flüssigkeit steuerbar bzw. ist das Verfahren selbstregulierend. Während bei den bekannten Verfahren, bei denen das thermische Verbinden in einer druckfesten Form erfolgt, die den bei Mikrowellenanregung entstehenden Dampf des MW-absorbierenden Mediums aufnimmt, diese Verfahrensparameter über die Energie des MW-Feldes oder die Verweilzeit im Mikrowellenfeld gesteuert werden, entweicht bei dem erfindungsgemäßen Verfahren das MW-absorbierende Medium vollständig, so daß eine Wärmezufuhr ausschließlich bis zur vollständigen Verflüchtigung erfolgt, ohne daß das Verfahren unter Druckabschluß in einem geschlossenen System ablaufen muß. Auch entfällt das bei dem bekannten Verfahren notwendige Trocknen des Produktes, das beim Abkühlen der Form die kondensierende Feuchte aufnimmt.

Das erfindungsgemäße Verfahren eignet sich insbesondere zur Herstellung von Formteilen aus Polyolefinpartikel, da Polyolefine im wesentlichen MW-durchlässig sind und allenfalls bei längerer MW-Exposition eine molekulare Schädigung erfahren.

In einer bevorzugten Ausführungsform werden Polypropylen (PP)-Partikel, insbesondere EPP (expandierbares Polypropylen), eingesetzt. Der Vorteil der Verwendung von EPP liegt in der Expandierbarkeit, d.h. bei Erwärmung dehnen sich die EPP-Partikel aus, so daß sie gegeneinander drücken und aufgrund ihrer Flexibilität eine größere Kontaktfläche zum Verschmelzen entsteht.

Bei der Verwendung von EPP, welches einen Schmelzpunkt von ca. 164° aufweist, ist vorzugsweise die Verwendung von Alkoholen, insbesondere Diethylenglykol (DEG), als MW-absorbierendes Medium vorgesehen. Der Siedepunkt von DEG liegt zwar bei ca. 240°, doch ist das MW-absorbierende DEG aufgrund seiner Flüchtigkeit besonders gut zur Wärmeübertragung an PP- oder EPP-Partikel geeignet. Ferner können dem DEG in bekannter Weise Additive, wie Benetzungsmittel oder höher bzw. tiefer siedende Flüssigkeiten, beigemischt werden. Um den Vorgang des thermischen Verbindens zu beschleunigen, kann das DEG vor der Zugabe zu den EPP-Partikeln erwärmt werden.

Das erfindungsgemäße Verfahren eignet sich auch zur Herstellung von Mehrschichtverbunden aus verschiedenartigen Polymerpartikeln oder zur Herstellung eines Formteils, auf das im gleichen MW-Prozeß eine Kunststoffolie od. dgl. thermisch aufgeschweißt wird. Es können Platten, Blöcke oder Stränge gefertigt werden, z.B. für Verpackungsmaterialien oder mechanisch und/oder thermisch wirksame Dämmaterialien.

In vorrichtungstechnischer Hinsicht wird die der Erfindung zugrundeliegende Aufgabe dadurch gelöst, daß wenigstens zwei unter Umgebungsdruck gehaltene, im wesentlichen parallel angeordnete, umlaufende Trägerbänder vorgesehen sind, von denen wenigstens eines angetrieben ist und in deren Zwischenraum die Polymerpartikel sowie gegebenenfalls MW-absorbierende Medien einbringbar sind, und daß die Trägerbänder mit den zwischen ihnen aufgegebenen Polymerpartikel bei ihrem Umlauf MW-Energiequellen passieren.

Eine Vorrichtung, bei der mit Wasser benetzte Polystyrolpartikel zwischen umlaufenden Trägerbändern aufgegeben und mittels eines hochfrequenten elektrischen Feldes expandiert und verbunden werden, ist aus DE 1 236 174 bekannt. Bei dieser Vorrichtung wird jedoch einerseits keine Mikrowellenenergie eingesetzt, andererseits ist die gesamte Vorrichtung in einem elektrisch isolierten Gehäuse eingeschlossen. Das Schäumen mittels Heißdampf erfordert den Einschluß der Förderbänder in einem langgestreckten großvolumigen Gehäuse. Dies ist zum einen aufwendig und teuer, zum anderen ist mit einer solchen Vorrichtung die Durchführung des erfindungsemäßen Verfahrens nicht möglich, da die Trägerbänder nicht unter Umgebungsdruck gehalten werden können und somit das Verfahren nicht selbstregulierend ist, weil sich das in die Gasphase überführte MW-absorbierende Medium nicht verflüchtigen kann und darf.

Die zwischen den Trägerbändern eingelagerte Partikelschicht ist erfindungsgemäß vorzugsweise durch den mechanischen Druck der Trägerbänder und/oder die Kontur des Zwischenraums zwischen den Trägerbändern formbar. Der Abstand der Trägerbänder ist bevorzugt veränderbar, um Formteile mit unterschiedlichen Abmessungen herstellen zu können.

Eine bevorzugte Ausführung der erfindungsgemäßen Vorrichtung sieht vor, daß die Bänder aus einem mikrowellendurchlässigen Material, insbesondere aus Silikon, bestehen, so daß die MW-Energie in einfacher Weise von außen in den Zwischenraum zwischen die Trägerbänder eingekoppelt werden kann.

In einer weiterhin bevorzugten Ausführung sind die Bänder von mehreren Stützrollen abgestützt, die vorzugsweise ebenfalls aus einem MW-durchlässigen Material, insbesondere aus Teflon, bestehen.

Der erforderliche mechanische Druck auf die Polymerpartikel während des thermischen Verbindens wird bei der erfindungsgemäßen Vorrichtung durch die Trägerbänder aufgebracht. Er kann, wie bereits erwähnt, durch Einstellen des Abstandes der Stützrollen beider Trägerbänder variabel eingestellt werden. Dies kann zusätzlich durch einen konischen Einzug der Trägerbänder unterstützt werden.

Stattdessen kann auch vorgesehen sein, daß die Trägerbänder mit verschiedenen Geschwindigkeiten angetrieben sind, nur eines der Trägerbänder angetrieben ist, oder die Vorrichtung weist mehrere hintereinander geschaltete Trägerbänder auf, von denen die vorlaufenden, auf die die Polymerpartikel aufgebracht werden, mit einer größeren Umlaufgeschwindigkeit angetrieben sind als die nachlaufenden Bänder, so daß die Polymerpartikel im Bereich der nachlaufenden Trägerbänder verdichtet werden. In einer weiterhin vorteilhaften Ausgestaltung ist vorgesehen, daß die Polymerpartikel unter mechanischem Druck in den Zwischenraum zwischen den Trägerbändern einbringbar sind, beispielsweise mit einem Schneckenrad.

In jedem Fall arbeitet die Vorrichtung unter Umgebungsdruck so daß die MW-absorbierende Flüssigkeit, die kontinuierlich zugeführt wird und/oder mit der die Polymerpartikel vor der Verarbeitung benetzt worden sind, entweichen kann und nach dem vollständigen Entweichen keine Wärme mehr auf die Partikel übertragen wird, so daß die Verarbeitungstemperatur bzw. die Verarbeitungszeit durch die Zugabemenge des mikrowellenabsorbierenden Mediums steuerbar ist.

Zur Herstellung von platten- und/oder blockförmigen Formteilen weisen die Trägerbänder eine im wesentlichen ebene Oberfläche zur Erzeugung ebener Flächen am Formteil auf. Die Trägerbänder können aber auch profiliert sein, so daß Formteile mit einem Oberflächenprofil entstehen. Zur Herstellung von zylindrischen, insbesondere kreiszylindrischen, Formteilen weisen die Trägerbänder beispielsweise runde bzw. kreissegmentförmige Querschnitte oder Querschnittsabschnitte auf, die zwischen sich einen im wesentlichen zylindrischen Raum einschließen. Es kann sich beispielsweise um Profilbänder mit Längsprofil handeln, wobei jedes Trägerband gegebenenfalls mehrere rinnenförmige Längsprofile besitzt.

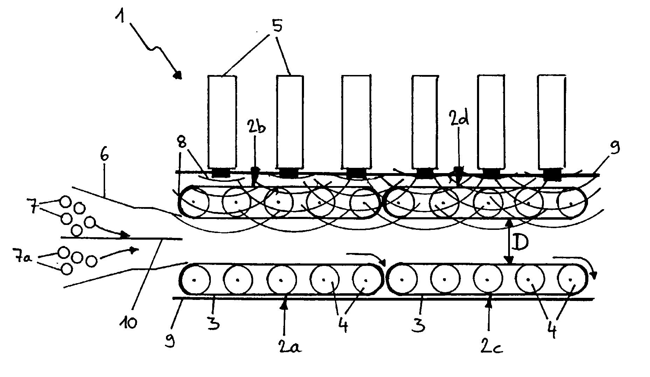

Nachstehend ist die erfindungsgemäße Vorrichtung anhand einer bevorzugten Ausführungsform unter Bezugnahme auf die Zeichnung erläutert, die eine schematische Seitenansicht der Vorrichtung zeigt.

Die erfindungsgemäße Vorrichtung 1 weist wenigstens zwei parallel übereinander angeordnete Trägerbänder 2a, 2b bzw. 2c, 2d, auf, die beispielsweise aus MW-durchlässigen, endlosen Silikonbändern (3) bestehen. Die Silikonbänder 3 sind über Stützrollen 4 geführt, die vorzugsweise ebenfalls aus einem MW-durchlässigen Material, wie Teflon bestehen. Oberhalb der oberen Trägerbänder 2b und 2d sind MW-Strahler 5 angeordnet, die ein Mikrowellenfeld 8 erzeugen. In diesem Bereich sind oberhalb der oberen 2b, 2d und unterhalb der unteren Trägerbänder Abschirmungen 9 angeordnet. Der Abstand D der Trägerbänder 2a, 2b bzw. 2c, 2d ist insbesondere variierbar.

Die Polymerpartikel 7, 7a werden vorzugsweise unter mechanischem Druck über eine Zuführung 6 mit konischem Einzug in den Zwischenraum zwischen die Trägerbänder 2a, 2b, 2c, 2d eingebracht, beispielsweise mit einem (nicht abgebildeten) Schneckenrad und/oder die Partikel werden in Druckkammern vorkomprimiert und expandieren während der Verarbeitung. Die Zuführung 6 weist in dem gezeigten Ausführungsbeispiel eine Trennwand 10 auf. Auf diese Weise ist es beispielsweise möglich, Mehrschichtverbunde aus Partikel 7, 7a unterschiedlicher Materialien zu fertigen, die zur Verarbeitung dem Zwischenraum zwischen den Trägerbändern kontinuierlich und räumlich voneinander getrennt zugeführt werden. Die Polymerpartikel 7, 7a sind entweder vor der Zugabe mit einer MW-absorbierenden Flüssigkeit benetzt worden oder wird eine solche im Bereich der Zuführung 6 aufgedüst.

In vorteilhafter Ausführung laufen die hinteren Trägerbänder 2c, 2d mit einer kleineren Geschwindigkeit um als die vorderen Trägerbänder 2a, 2b, so daß die Partikel 7, 7a während des thermischen Verbindens zusätzlich zwischen den nachlaufenden Trägerbändern 2c, 2d verdichtet werden. Gegebenenfalls können auch die Stützrollen 4 der oberen 2b, 2d und unteren Trägerbänder 2a, 2c in ihrem Abstand einstellbar sein, um den Druck zu variieren.

Es können Trägerbänder mit ebener oder profilierter Oberfläche zur Erzeugung flacher, ebener oder strangförmiger, zylindrischer Formteile eingesetzt werden. Der Antrieb der Trägerbänder 2a, b, c und d kann durch Antrieb je einer Stützrolle 4 erfolgen.

## Patentansprüche

1. Verfahren zum thermischen Verbinden von geschäumten Polymerpartikeln zu Formteilen mittels Mikrowellenenergie unter Verwendung eines MW-absorbierenden Mediums, dadurch gekennzeichnet, daß die geschäumten Polymerpartikel mit dem MW-absorbierenden Medium zwischen umlaufenden Trägerbändern aufgegeben und als dichte Packung mittels der Trägerbänder an wenigstens einer MW-Energiequelle kontinuierlich vorbeigeführt werden, wobei Art und Menge des MW-absorbierenden Mediums so gewählt werden, daß den Partikeln bei dem herrschenden Umgebungsdruck die zur Herstellung des Verbundes notwendige Schmelzwärme zugeführt wird.

2. Verfahren nach Anspruch 1, dadurch gekennzeichnet, daß die geschäumten Polymerpartikel zwischen den Trägerbändern zumindest während der MW-Behandlung unter mechanischem Druck gehalten werden.

3. Verfahren nach Anspruch 1 oder 2, dadurch gekennzeichnet, daß das MW-absorbierende Medium eine die Oberfläche der geschäumten Polymerpartikel benetzende Flüssigkeit ist, die auf die Oberfläche der Polymerpartikel diese einhüllend aufgebracht und unter Einwirkung der MW-Energie verdampft wird.

4. Verfahren nach Anspruch 3, dadurch gekennzeichnet, daß die Temperatur und/oder die Einwirkungsdauer der Temperatur auf die Polymerpartikel durch die Zugabemenge des MW-absorbierenden Mediums gesteuert wird.

5. Verfahren nach einem der Ansprüche 1 bis 4, dadurch gekennzeichnet, daß geschäumte Polymerpartikel aus Polyolefinen eingesetzt werden.

6. Verfahren nach Anspruch 5, dadurch gekennzeichnet, daß geschäumte Polymerpartikel aus Polypropylen (PP) eingesetzt werden.

7. Verfahren nach einem der Ansprüche 1 bis 6, dadurch gekennzeichnet, daß als MW-absorbierendes Medium ein Alkohol, insbesondere Diethylenglykol, eingesetzt wird.

8. Verfahren nach einem der Ansprüche 1 bis 7, dadurch gekennzeichnet, daß dem MW-absorbierenden Medium Additive zugesetzt werden.

9. Verfahren nach einem der Ansprüche 1 bis 7, dadurch gekennzeichnet, daß geschäumte Partikel verschiedener Polymere zur Herstellung eines Mehrschichtverbundes eingesetzt werden.

10. Verfahren nach einem der Ansprüche 1 bis 9, dadurch gekennzeichnet, daß die geschäumten Polymerpartikel anläßlich der MW-Behandlung mit einer Kunststoffolie thermisch verbunden werden.

11. Verfahren nach einem der Ansprüche 1 bis 10 zur Herstellung von Platten, Blöcken oder Strängen.

12. Verfahren nach Anspruch 11 zur Herstellung von Verpackungsmaterialien.

13. Verfahren nach Anspruch 11 zur Herstellung von mechanisch und/oder thermisch wirksamen Dämmaterialien.

14. Vorrichtung (1) zum kontinuierlichen thermischen Verbinden von geschäumten Polymerpartikel (7, 7a) zu Formteilen mittels Mikrowellenenergie (8) unter Verwendung eines MW-absorbierenden Mediums, insbesondere zur Durchführung des Verfahrens gemäß einem der Ansprüche 1 bis 13, dadurch gekennzeichnet, daß wenigstens zwei unter Umgebungsdruck gehaltene, im wesentlichen parallel angeordnete, umlaufende Trägerbänder (2a, 2b bzw. 2c, 2d) vorgesehen sind, von denen wenigstens eines angetrieben ist und in deren Zwischenraum die Polymerpartikel (7, 7a) sowie gegebenenfalls MW-absorbierende Medien einbringbar sind, und daß die Trägerbänder mit den zwischen ihnen aufgegebenen Polymerpartikel bei ihrem Umlauf MW-Energiequellen (5) passieren.

15. Vorrichtung nach Anspruch 14, dadurch gekennzeichnet, daß die zwischen den Trägerbändern (2a, 2b, 2c, 2d) eingelagerte Partikelschicht durch den mechanischen Druck der Trägerbänder (2a, 2b, 2c, 2d) und/oder die Kontur des Zwischenraums zwischen den Trägerbändern (2a, 2b, 2c, 2d) formbar ist.

16. Vorrichtung nach Anspruch 14 oder 15, dadurch gekennzeichnet, daß der Abstand (D) der Trägerbänder (2a, 2b bzw. 2c, 2d) veränderbar ist.

17. Vorrichtung nach einem der Ansprüche 14 bis 16, dadurch gekennzeichnet, daß die die Trägerbänder (2a, 2b, 2c, 2d) bildenden einzelnen Bänder (3) aus einem mikrowellendurchlässigen Material, insbesondere aus Silikon, bestehen.

18. Vorrichtung nach einem der Ansprüche 14 bis 17, dadurch gekennzeichnet, daß zumindest das untere Band (3) von mehreren Stützrollen (4) abgestützt ist.

19. Vorrichtung nach einem der Ansprüche 14 bis 18, dadurch gekennzeichnet, daß die Stützrollen (4) aus einem MW-durchlässigen Material, insbesondere aus Teflon, bestehen.

20. Vorrichtung nach einem der Ansprüche 14 bis 19, dadurch gekennzeichnet, daß der zum thermischen Verbinden der Polymerpartikel (7, 7a) erforderliche mechanische Druck über die Trägerbänder (2a, 2b, 2c, 2d) und/oder über deren Stützrollen (4) aufbringbar ist.

21. Vorrichtung nach einem der Ansprüche 18 bis 20, dadurch gekennzeichnet, daß der Abstand der Stützrollen (4) des oberen (2b, 2d) und unteren Trägerbandes (2a, 2c) zur Druckänderung einstellbar ist.

22. Vorrichtung nach einem der Ansprüche 14 bis 21, dadurch gekennzeichnet, daß die Trägerbänder (2a, 2b, 2c, 2d) mit verschiedenen Geschwindigkeiten antreibbar sind.

23. Vorrichtung nach Anspruch 22, dadurch gekennzeichnet, daß zwei übereinander angeordnete Trägerbänder (2a, 2b) mit unterschiedlichen Geschwindigkeiten antreibbar sind.

24. Vorrichtung nach Anspruch 22 oder 23, dadurch gekennzeichnet, daß mehrere Trägerbänder (2a, 2b bzw. 2c, 2d) hintereinander geschaltet sind und die vorlaufenden Trägerbänder (2a, 2b), auf die die Polymerpartikel (7, 7a) aufbringbar sind, mit einer höheren Geschwindigkeit als die nachlaufenden Trägerbänder (2c, 2d) antreibbar sind.

25. Vorrichtung nach einem der Ansprüche 14 bis 24, dadurch gekennzeichnet, daß die Polymerpartikel (7, 7a) unter mechanischem Druck in den Zwischenraum zwischen den Trägerbändern (2a, 2b, 2c, 2d) einbringbar sind.

26. Vorrichtung nach einem der Ansprüche 14 bis 25, dadurch gekennzeichnet, daß die Trägerbänder (2a, 2b, 2c, 2d) zur Herstellung platten- und/oder blockförmiger Formteile eine im wesentlichen ebene Oberfläche aufweisen.

27. Vorrichtung nach einem der Ansprüche 14 bis 25, dadurch gekennzeichnet, daß die Trägerbänder (2a, 2b, 2c, 2d) zur Herstellung von zylindrischen, insbesondere kreiszylindrischen, Formteilen einen runden, insbesondere kreissegmentförmigen Querschnitt oder entsprechende Querschnittsabschnitte in den einander zugekehrten Flächen, wie z.B. in Form von Längsrillen, aufweisen.
